Europäisches Patentamt

European Patent Office

Office européen des brevets

(11) Veröffentlichungsnummer: **0 283 582**
A2

## EUROPÄISCHE PATENTANMELDUNG

(21) Anmeldenummer: 87118610.2

(22) Anmeldetag: 15.12.87

(51) Int. Cl.4 **B29C 45/17** , B29C 45/23

(30) Priorität: 16.03.87 DE 3708434

(43) Veröffentlichungstag der Anmeldung:
28.09.88 Patentblatt 88/39

(84) Benannte Vertragsstaaten:
AT CH DE ES FR GB IT LI NL

(71) Anmelder: Hehl, Karl
Arthur-Hehl-Strasse 32
D-7298 Lossburg-1(DE)

(72) Erfinder: Hehl, Karl
Arthur-Hehl-Strasse 32
D-7298 Lossburg-1(DE)

(74) Vertreter: Mayer, Friedrich, Dr. et al
Patentanwälte Dr. Mayer & Frank Westliche 24
D-7530 Pforzheim(DE)

(54) Spritzgiesseinheit für eine Kunststoff-Spritzgiessmaschine.

(57) Die Verschlußdüse (13) des Plastifizierzylinders (11) der Spritzgießeinheit ist über einen zweiarmigen Hebel (13b) mit Hilfe eines hydraulischen Steuerungszylinders (14) steuerbar. Dieser ist am Trägerblock (10) des Plastifizierzylinders (11) angeordnet und bildet mit diesem bei Freisetzung des Plastifizierzylinders (11) zwecks Wechsel eine Bewegungseinheit. Er ist ferner über eine kraftübertragende Stange (16) mit dem Hebel (13b) der Verschlußdüse (13) gelenkig verbunden. Eine hydraulisch betätigbare Kupplungseinrichtung ermöglicht die automatische Abtrennung des Steuerungszylinders (14) von der Stange (16). Bei einer solchen Ausbildung ist auf der Grundlage eines Baukastensystemes eine rationelle Fertigung von Varianten der Spritzgießeinheit mit offener Düse und mit Verschlußdüse (13) sowie eine gegenseitige Umwandlung der Varianten ineinander mit extrem geringen Montageaufwand möglich.

FIG. 1

## Spritzgießeinheit für eine Kunststoff-Spritzgießmaschine.

Die Erfindung bezieht sich auf eine Spritzgießeinheit entsprechend dem Oberbegriff des Patentanspruches 1.

Bekannte Spritzgießeinheiten dieser Art (DE-PS 35 26 710) können bedarfsweise mit einem mit offener Düse oder mit einer Verschlußdüse ausgerüsteten Plastifizierzylinder arbeiten, weil ein entsprechender Austausch ohne ins Gewicht fallenden Zeitverlust im Rahmen eines automatischen Wechsels der Plastifizierzylinders möglich ist. Offene Düsen werden dank ihrer vielseitigen Verwendbarkeit bei der Verarbeitung unterschiedlicher Kunststoffe und wegen ihrer geringen Störanfälligkeit vielfach bevorzugt. Sie finden in Verbindung mit Dekompressionseinrichtungen Verwendung, die das plastische Material im Plastifizierzylinder vor dem Absetzen von der Spritzgießform durch einen entsprechenden axialen Rückhub der Förderschnecke vom Überdruck befreien, so daß ein unerwünschtes Austreten des plastischen Materials aus der Düse vermieden wird. Verschlußdüsen sind bei der Bewältigung spezieller spritztechnischer Aufgaben erforderlich, zum Beispiel bei der Verarbeitung von Polyamiden. Sie ermöglichen beispielsweise eine hohe Einspritzgeschwindigkeit in der Anfangsphase der Einspritzung, wenn das plastische Material im Plastifizierzylinder vor Öffnung der Düse unter einem entsprechenden Überdruck steht. Die bekannten Verschlußdüsen arbeiten in der Regel mit einer federbelasteten Verschlußnadel (GB-PS 1,010,008).

Es ist aber auch bereits bekannt, die Verschlußnadel einer Verschlußdüse über einen zweiarmigen Hebel mit Hilfe eines Hydraulikzylinders zu steuern, der unmittelbar im Bereich der Verschlußdüse am Plastifizierzylinder befestigt ist (FR-PS 1 439 001, Fig. 7 ; DE-GM 70 20 969).

Der Erfindung liegt die Aufgabe zugrunde, eine Spritzgießeinheit der eingangs genannten Gattung, bei welcher der Plastifizierzylinder zur Erleichterung seines Wechsels automatisch von seinem Trägerblock im Rahmen der Freisetzungsbewegung abtrennbar ist, derart weiterzubilden, daß auf der Grundlage eines ziemlich begrenzten und darum einfach zu lagernden Bauteile-Sortimentes zwei Varianten der Spritzgießeinheit, nämlich eine Variante mit offener Düse und einer Variante mit einer Verschlußdüse nach dem Baukastenprinzip kostengünstig gefertigt werden können, wobei die erstgenannte Variante bereits die baulichen Voraussetzungen für eine Nachrüstung zur Umwandlung in die zweitgenannte Variante bei extrem geringem Montageaufwand aufweist.

Diese Aufgabe wird erfindungsgemäß durch die im Kennzeichnen des Patentanspruches 1 genannten Merkmale gelöst.

Bei einer solchen Ausbildung ist der Steuerungszylinder für die Verschlußdüse vom Plastifizierzylinder zum Versorgungsblock verlegt, so daß bei der Freisetzungsbewegung des Plastifizierzylinders, im Rahmen eines Wechsels, mit dem Trägerblock auch der Steuerungszylinder vom Plastifizierzylinder distanziert wird. Als Voraussetzung hierfür ist eine automatische Abkupplungsmöglichkeit des Steuerungszylinders von der Verschlußdüse geschaffen, die in das Gesamtprogramm des Rechners der zugehörigen Kunststoff-Spritzgießmaschine integrierbar ist. Dadurch liegen die weiteren Voraussetzungen dafür vor, daß den unterschiedlichen Bedürfnissen der Kunden für eine Verarbeitung von Kunststoffen mit offener Düse und/oder mit Verschlußdüse besser Rechnung getragen werden kann. Tritt zum Beispiel bei einem Kunden, der bislang mit einer Spritzgießeinheit mit offener Düse arbeitet das Erfordernis auf, andere Spritzlinge zu liefern, die nur mit einer Spritzgießeinheit mit Verschlußdüse herstellbar sind, so kann er die vorhandene Spritzgießeinheit mit extrem geringem finanziellen und montagemäßigem Aufwand in eine Spritzgießeinheit mit Verschlußdüse um rüsten, indem er nach Auswechslung der Düse die von der Verschlußdüse abkuppelbaren Bauteile zur Düsensteuerung mit relativ wenigen Handgriffen im eigenen Betrieb in die an der vorhandenen Spritzgießeinheit bereits vorgesehenen Anschlußstellen (z.B. in die Sacklochbohrung im Trägerblock bzw. in die Aufnahmebohrung im Schieber) einfügt.

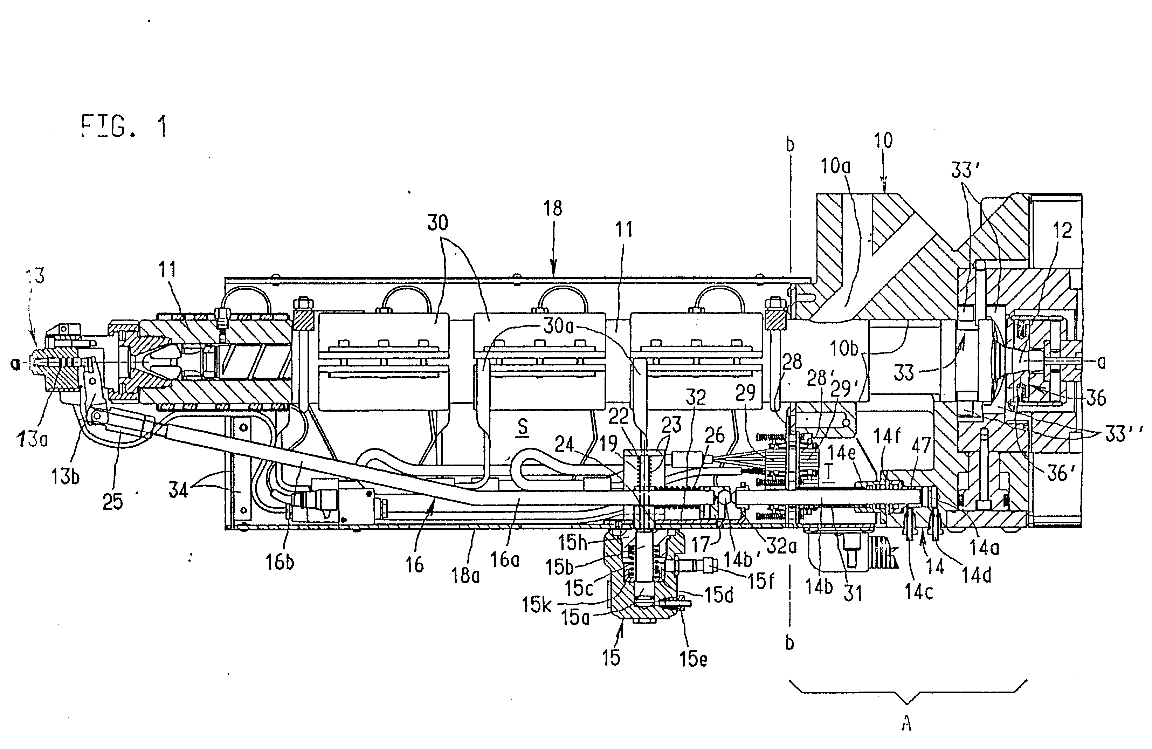

Beim Fertigungsbetrieb bedeutet die Bereitstellung beider Varianten im Ergebnis eine verhältnismäßig beschränkte Lagerhaltung und eine rationelle Serienfertigung auf der Grundlage des Baukastenprinzips, wobei das zugehörige Bauteilesortiment im wesentlichen folgende Bauteile umfaßt: Trägerblöcke; Bauteile für die zugehörigen Verriegelungseinrichtungen zur axialen Verriegelung der Plastifizierzylinder; Plastifizierzylinder in den die Bedürfnisse der Praxis abdeckenden hauptsächlichen Ausführungen; außerdem Verschlußdüsen und offene Düsen, die mit den Plastifizierzylindern wahlweise verbindbar sind; sowie die Bauteile für den Steuerungszylinder und schließlich die Bauteile für die Kraftübertragung vom Steuerungszylinder auf die Verschlußdüse sowie die Bauteile der Kupplungseinrichtung und des Kupplungszylinders. Alle genannten Bauteile sind standardisiert, also auch für unterschiedliche Ausführungen von Plastifizierzylindern und Verschlußdüsen brauchbar. Beim Wechsel der Plastifiziereinheit ist diese für die verschiedenen Transportbewegungen grundsätzlich frei vom Steuerungszylinder, der in geschützter Position am Trägerblock innerhalb der Spritzgießeinheit verbleibt. Die Herausnahme des Steuerungszylinders aus dem Bereich der Verschlußdüse ist aber auch aus einem anderen Grunde von Bedeutung: Beim Spritzbetrieb erreicht nämlich die Verschlußdüse vielfach Temperaturen, die eventuell auftreffendes Lecköl des Steuerungszylinders sofort zum Entflammen bringen. Angesichts der scharfen Sicherheitsbestimmungen in zahlreichen Ländern und den entsprechenden potentiellen Regreßansprüchen bedeutet somit die Herausnahme des Steuerungszylinders aus dem Gefahrenbereich der Verschlußdüse eine wesentliche Verbesserung. Wenngleich die Verlegung des Steuerungszylinders an den Trägerblock einen gewissen zusätzlichen technischen Aufwand von Kraftübertragungs-und Kupplungsmitteln erfordert, so ist doch im Gesamtkonzept der Serienfertigung durch die spezifische konstruktive Ausbildung der Grundvariante der Spritzgießeinheit (mit offener Düse) im Sinne einer Eignung für eine extrem einfache Umwandlung bzw. Nachrüstung in eine Spritzgießeinheit mit automatisch steuerbarer Verschlußdüse eine generelle Kostensenkung auf der Grundlage des begrenzten, standardisierten Bauteile-Sortimentes möglich. Dies umsomehr, als die als Kupplungszylinder dienende Kolben-Zylinder-Einheit Doppelfunktionen ausübt. Nach Patentanspruch 5 steuert diese Kolben-Zylinder-Einheit sowohl die Kupplung als auch die axiale Arretierung des Plastifizierzylinders für die Freisetzungsbewegung. Nach den Patentansprüchen 8 bis 10 steuert die genannte Kolben-Zylinder-Einheit sowohl die Kupplung als auch die Schieber für die axiale Verriegelung des Plastifizierzylinders. Im übrigen ist die Verlegung des Steuerungszylinders in den Trägerblock eine Voraussetzung für einen den trägerblockfreien Wechsel des Plastifizierzylinders beim Transport wesentlich erleichternden Schutzmantel (Profilschiene 18) am Plastifizierzylinder. Nachstehend wird die Erfindung erläutert. Es zeigen in einem ersten Ausführungsbeispiel (Fig. 1-13):

Fig. 1,2 Den vorderen, die Plastifiziereinheit, den Trägerblock und die Verriegelungseinrichtung den Plastifizierzylinder umfassenden Teil der Spritzgießeinheit bei angekuppeltem und abgekuppeltem Steuerungszylinder für die Verschlußdüse,

Fig. 3 die aus dem Trägerblock freigesetzte Plastifiziereinheit gemäß den Fign. 1,2,

Fig. 4 die Plastifiziereinheit gemäß Fig. 3 aus Richtung Y in vergrößerter Darstellung,

Fig. 5 die von der Plastifiziereinheit befreite Spritzgießeinheit in einer Ansicht aus Richtung Z von Fig. 6,

Fig. 6 die Anordnung gemäß Fig. 5 im vertikalen Schnitt durch die Symmetrieebene,

Fig. 7-12 die Kupplungseinrichtung in unterschiedlichen Positionen der Kupplungsteile und

Fig. 13 einen Schnitt nach Linie XIII-XIII von Fig. 3 in vergrößerter Darstellung.

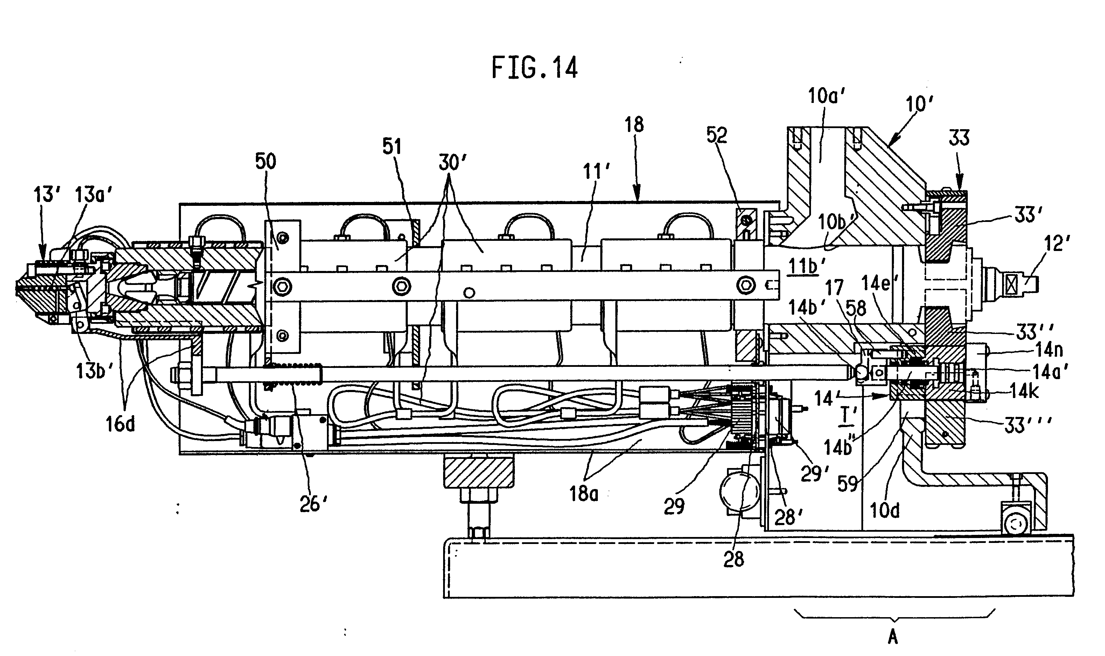

In einem weiteren Ausführungsbeispiel (Fig. 14-18) zeigen:

Fig. 14 Den vorderen Teil der Spritzgießeinheit in einer Darstellung entsprechend Fig. 1,

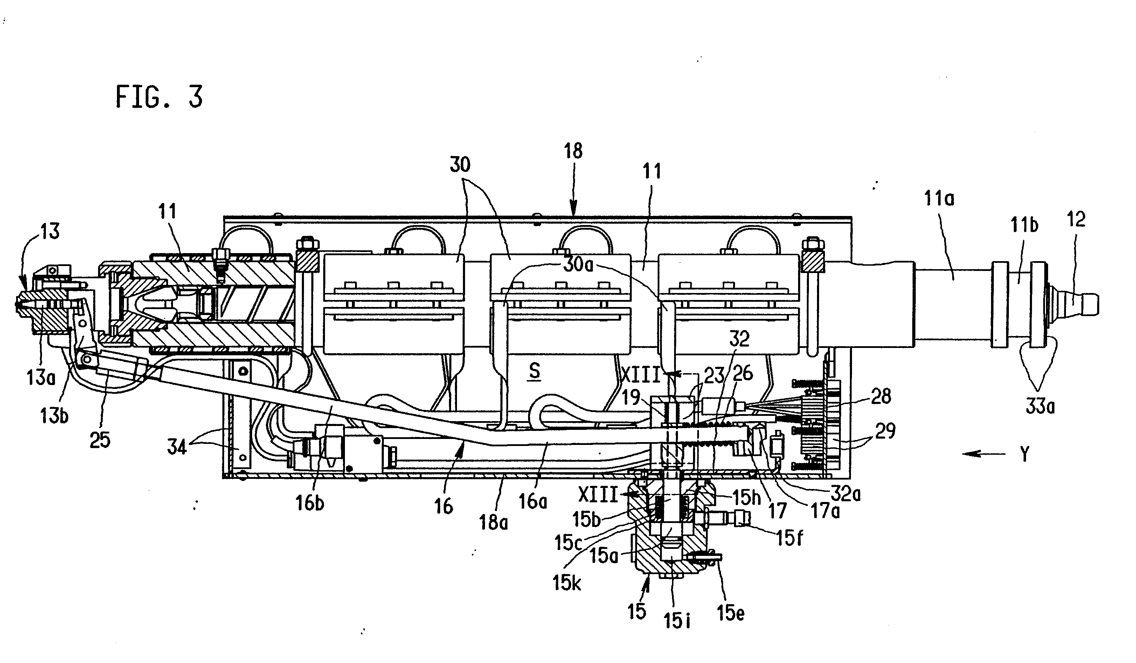

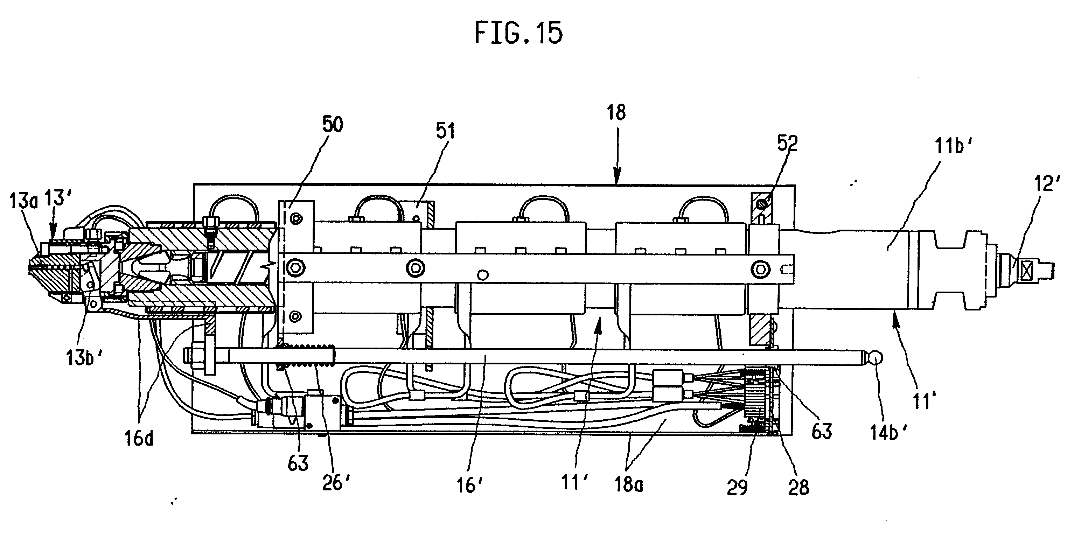

Fig. 15 die Plastifiziereinheit der Spritzgießeinheit in einer Darstellung gemäß Fig. 3,

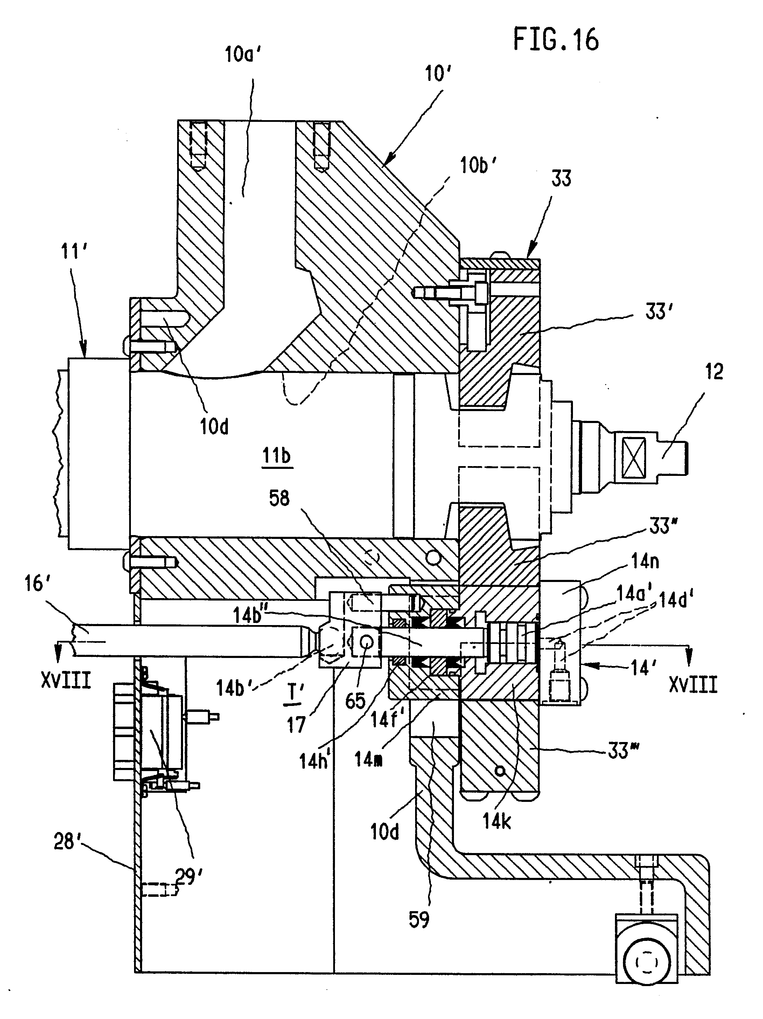

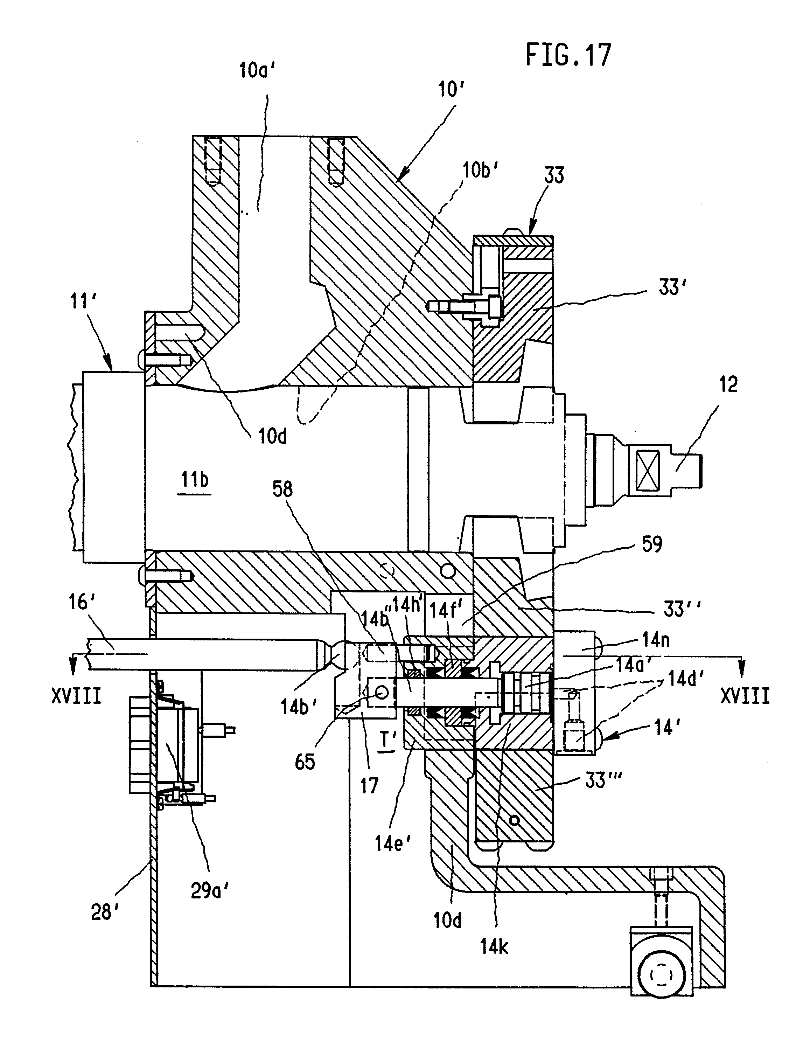

Fig. 16,17 einen Ausschnitt aus der Anordnung gemäß Fig. 14 bei angekuppeltem und abgekuppeltem Steuerungszylinder in vergrößerter Darstellung und

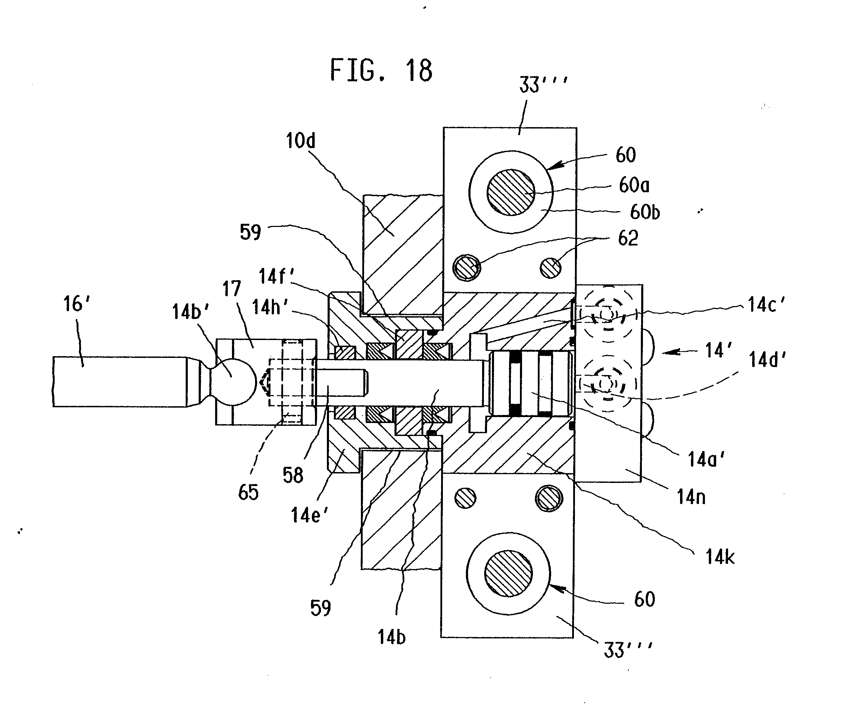

Fig. 18 einen Schnitt nach Linie XVIII-XVIII von Fig. 16.

In beiden Ausführungsbeispielen sind gleichwirkende Bauteile mit numerisch gleichen Bezugszeichen versehen, die jedoch im Ausführungsbeispiel der Fign. 14-18 mit unterscheidenden Zusätzen versehen sind. In den folgenden, für beide Ausführungsbeispiele geltenden Ausführungen sind diese unterscheidenden Zusätze jedoch weggelassen.

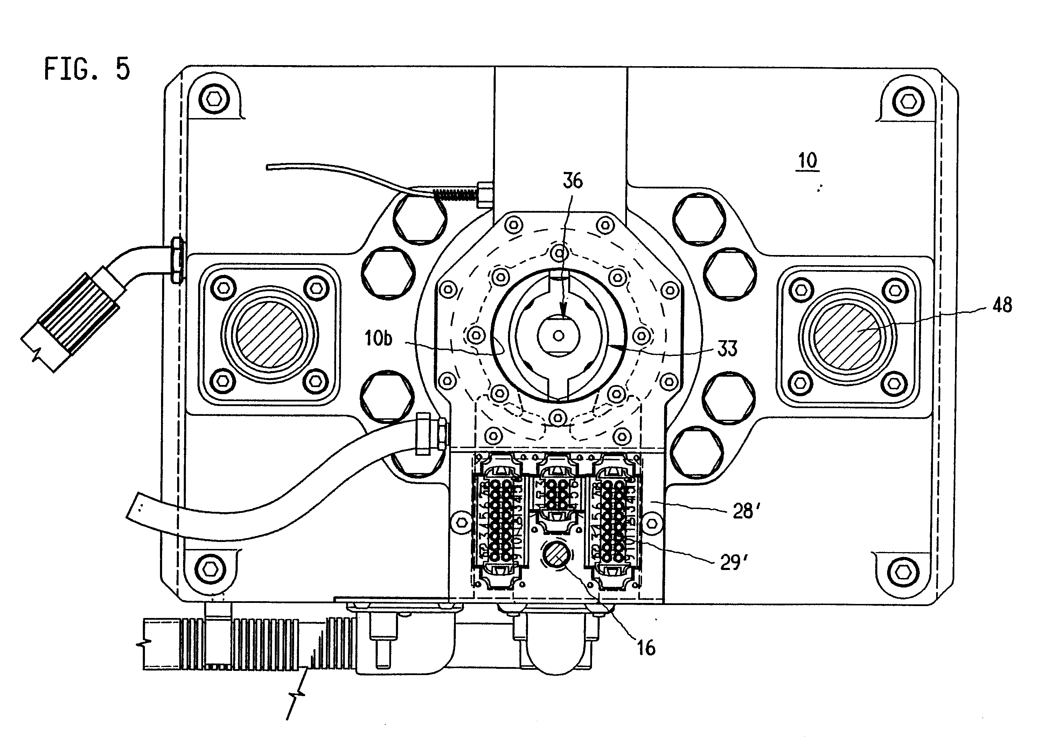

Der Plastifizierzylinder 11 der Plastifiziereinheit ist rückseitig in der zentralen Bohrung 10b eines mit Fallschacht 10a für die Zufuhr des Kunststoffmaterials versehenen Trägerblockes 10 aufgenommen. Der mit einer rotierbaren und axial verschiebbaren Förderschnecke 12 versehene Plastifizierzylinder 11 ist in den zeichnerisch dargestellten Ausführungsbeispielen mit einer Verschlußdüse 13 ausgerüstet. Die Spritzgießeinheit ist mittels einer hydraulischen Antriebseinrichtung in stationären, horizontalen Säulen 48 verschiebbar, also auf eine Spritzgießform aufsetzbar bzw. absetzbar. Die hierfür vorgesehene Antriebseinrichtung umfaßt hydraulische Zylinder, welche Bestandteil der Spritzgießeinheit sind. Die stirnseitigen Deckel dieser hydraulischen Zylinder sind aus Fig. 5 erkennbar. Ihre Kolben sitzen fest auf den Säulen 48 auf, während ihre eigentlichen, diese Säulen 48 koaxial umschließenden Zylinder fest mit dem Trägerblock 10 verbunden sind. Die Plastifiziereinheit ist im Gefolge eines rückwärts gerichteten Hubes der Antriebseinrichtung aus der zentralen Bohrung 10b des Trägerblockes 10 zwecks Auswechslung freisetzbar. In Arbeitsposition ist der Plastifizierzylinder 11 in der zentralen Bohrung 10b durch radial geführte Schieber einer hydraulisch betätigbaren Verriegelungseinrichtung 33 automatisch verriegelbar. Ein die Verschlußnadel 13a der Verschlußdüse 13 über einen zweiarmigen Hebel 13b in Schließstellung und Offenstellung steuernder Hydraulikzylinder (Steuerungszylinder 14) ist am Trägerblock 10 angeordnet. Der Steuerungszylinder 14 bildet mit dem Trägerblock 10 bei der Freisetzungsbewegung für den Plastifizierzylinder 11 eine Bewegungseinheit. Er ist im übrigen über wenigstens ein kraftübertragendes Element (Stange 16) mit dem Hebel 13b gelenkig verbunden. Eine hydraulisch betätigbare Kupplungseinrichtung zur automatischen Abtrennung des Steuerungszylinders 14 vom kraftübertragenden Element (Stange 16) weist einen Hydraulikzylinder (Kupplungszylinder 15 im Ausführungsbeispiel der Fign. 1-13 und 60 im Ausführungsbeispiel der Fign. 14-18) auf der etwa senkrecht zum Steuerungszylinder 14 steht. Die an den freien Enden des kraftübertragenden Elementes (Stange 16) und der Kolbenstange 14b des Steuerungszylinders 14 angeordneten Kupplungsteile 17;14b' der Kupplungseinrichtung sind in der vertikalen Symmetrieebene c-c der Spritzgießeinheit angeordnet. Diese Kupplungsteile sind im Gefolge einer durch den Kupplungszylinder 15;16 bewirkten, zum Plastifizierzylinder 11 radial gerichteten Relativbewegung in bzw. aus Kupplungsposition bewegbar, in welcher sie sich gegenseitig hintergreifen. Der Steuerungszylinder 14 ist unterhalb des in der zentralen Bohrung 10b aufgenommenen Abschnittes 11b des Plastifizierzylinders 11 in der vertikalen Symmetrieebene c-c der Spritzgießeinheit in einer Nische T des Trägerblockes angeordnet. Die Nische T ist von einer Steckverbinderplatte 28' abgedeckt. Das als Stange 16 ausgebildete kraftübertragende Element steht unter der axial wirkenden Kraft einer mittelbar am Plastifizierzylinder 11 widergelagerten, die Düsennadel 13a in Verschlußstellung drückenden Feder 26.

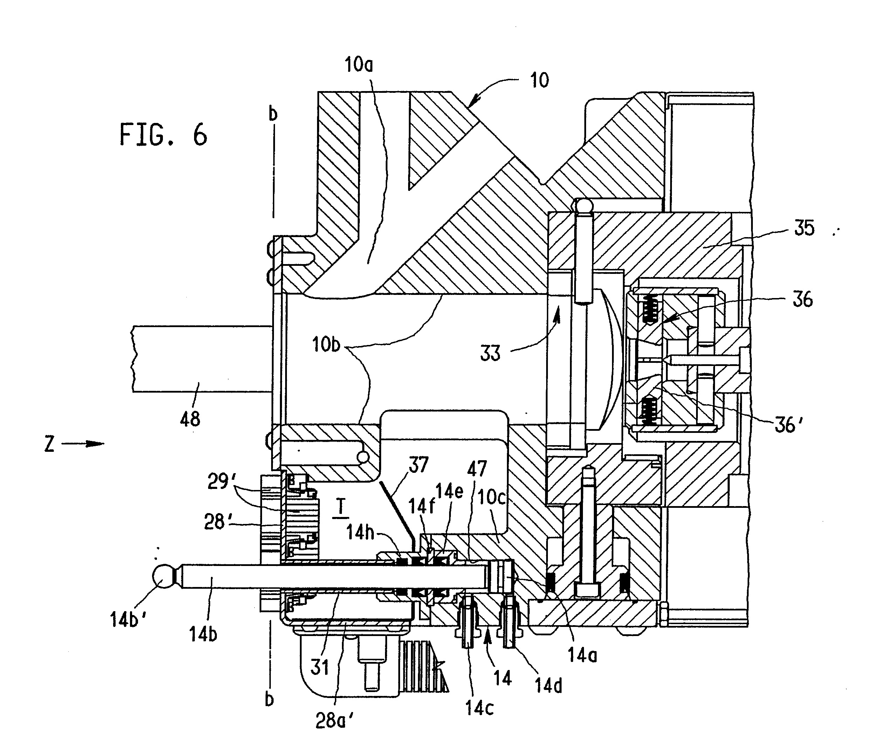

Im folgenden wird auf die Besonderheiten des Ausführungsbeispiels der Figuren 1 bis 13 eingegangen: Die Schieber 33',33" sind in einem zur zentralen Bohrung 10b koaxialen zylindrischen Führungsstück 35 angeordnet. Dieses ist formschlüssig in einer rückseitigen Ausnehmung des Trägerblockes 10 aufgenommen. In einem Hohlraum des Führungsstückes 35 ist eine Verriegelungseinrichtung 36 mit Riegeln 36' für die Förderschnecke 12 aufgenommen. Der Steuerungszylinder 14 für die Verschlußdüse 13 ist im axialen Bereich A der zentralen Bohrung 10d am Trägerblock 10 angeordnet. Der Kolben 14a des Steuerungszylinders ist in einer Sacklochbohrung 47 des Trägerblockes 10 aufgenommen, wie insbesondere aus Fig. 6 ersichtlich. Die Sacklochbohrung 47 ist unterhalb des in der zentralen Bohrung 10b aufgenommenen Abschnittes 11b des Plastifizierzylinders 11 in einer Nische T des Trägerblockes 10 in einem vorspringenden Teil 10c eingebracht. Die vor und hinter dem Kolben 14a liegenden Zylinderräume sind über Hydraulikanschlüsse 14c und 14d mit Drucköl beschickbar.

Der düsenseitige Zylinderraum ist mit Hilfe eines Zylinderdeckels 14e abgedeckt, der innerhalb des Teiles 10c des Trägerblockes 10 angeordnet ist und mit einem Axialflansch einen Ringraum umschließt, in welchem ein Dichtring angeordnet ist. Der Dichtring ist mittels einer Ringscheibe 14f von einem weiteren Dichtring getrennt, der in einer topfförmigen Dichtungshülse 14h aufgenommen ist. Die Kolbenstange 14b des Steuerungszylinders 14 läuft in einem Kupplungskopf 14b' aus und ist innerhalb der Nische von einer Schutzhülse 31 umschlossen.

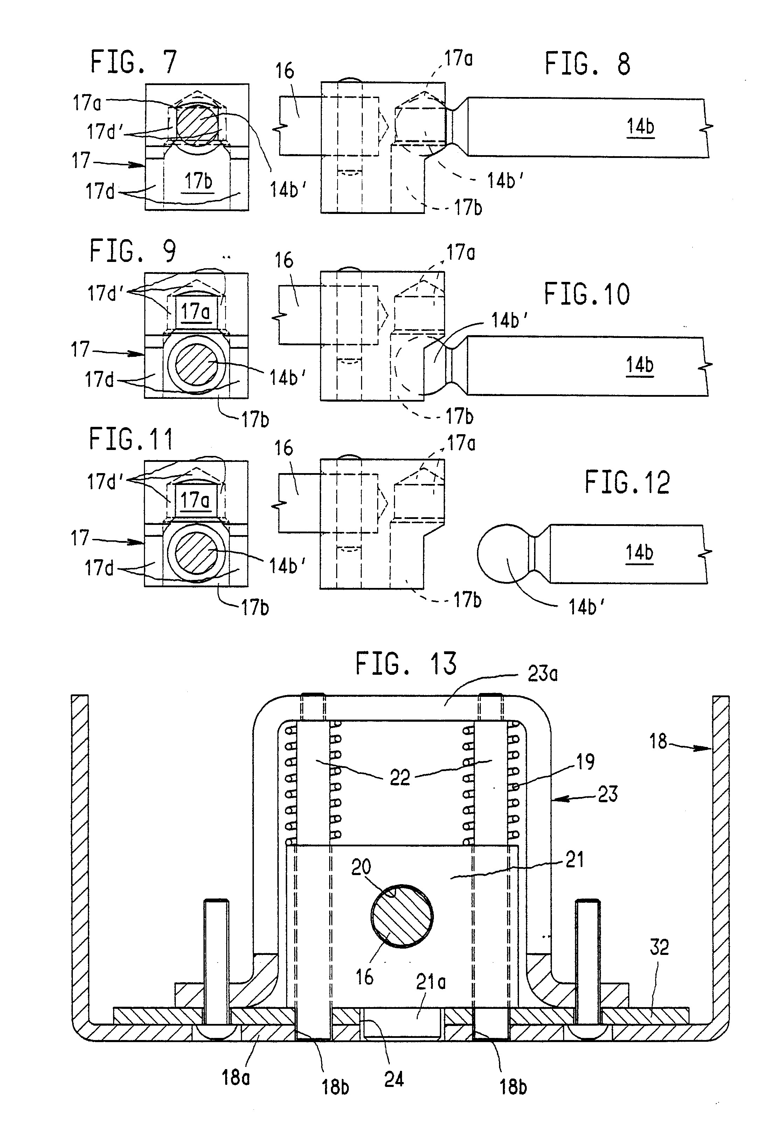

In Kupplungsposition ist der Kupplungskopf 14b von einem Kupplungselement 17 hintergriffen, das am freien Ende der Stange 16 befestigt ist. Wie aus Kupplungselement 17 gestaltet ist und in welcher Weise es den Kupplungskopf 14b' der Kolbenstange 14b hintergreift, ergibt sich insbesondere aus den Fign. 7-12: das etwa quaderförmige Kupplungselement 17 ist kupplungsseitig mit einer beidseits von Wandpartien 17d begrenzten vertikalen Führungsbahn 17b versehen, die sich oben zu einem Kupplungskäfig 17a verengt. Befinden sich Kupplungskopf 17b und Kupplungselement 17 in einem räumlichen Verhältnis zueinander wie aus den Fign. 9 und 10 ersichtlich, so ist der Steuerungszylinder 14 von der Verschlußdüse 13 getrennt. Er kann daher mit dem Trägerblock 10 von dem im Verbund der Plastifiziereinheit befindlichen Kupplungselement 17 nach rückwärts abgezogen werden, die insbesondere in Fig. 12 verdeutlicht ist.

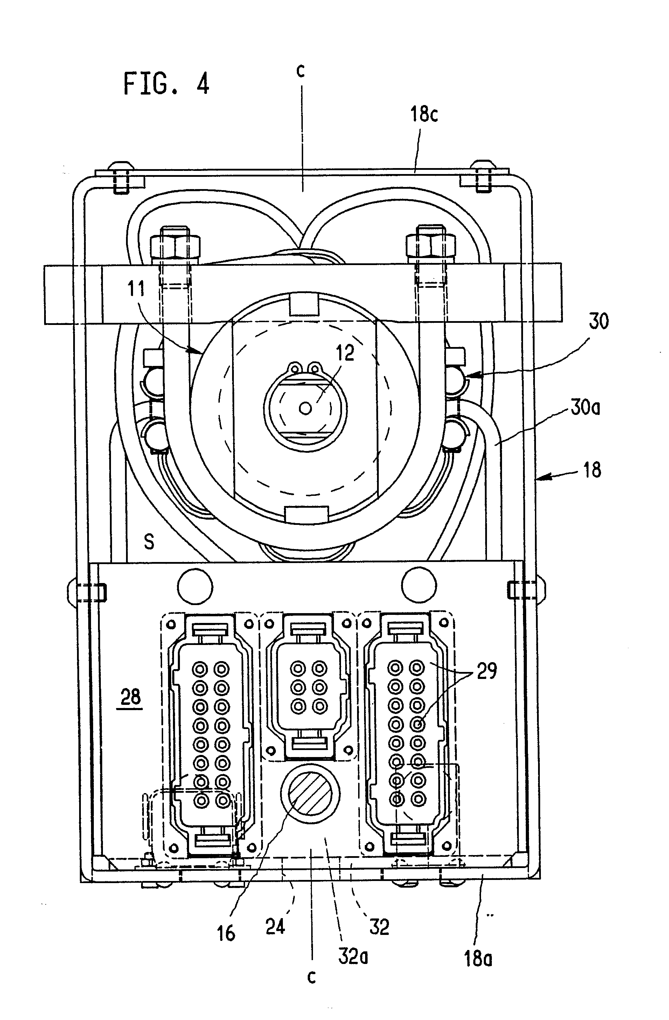

Dieses Abziehen erfolgt zur Einleitung eines Wechsels der Plastifiziereinheit nach Lösen der Kupplungseinrichtungen 33 und 36. In Kupplungsposition gemäß den Fign. 7,8 ist der Kupplungskopf 14b' durch die Hintergriffsflanken 17d' des Kupplungselementes 17 hintergriffen. Demzufolge kann die Lösung der Kupplung mit Hilfe einer zur Spritzachse a-a radialen Bewegung des Kupplungselementes 17 bewirkt werden. Diese Bewegung erfolgt unter einer entsprechenden Verschwenkung der das Kupplungselement 17 tragenden Stange 16. Der stationäre Kupplungszylinder 15, welcher an den Säulen 48 (Fig. 5,6) und/oder auf dem Maschinengestell abgestützt ist, greift zu diesem Zweck an der Stange 16 an. Die Stange 16 ist in der Bohrung 20 eines in vertikalen Führungsbolzen 22 (Fig. 13) führbaren Schlittens 21 mit Spiel gelagert. Der Schlitten 21 ist vom Kupplungszylinder 15 entgegen der Wirkung von Rückstellfedern 19 anhebbar. Die Führungsbolzen 22 sind an ihrem oberen Ende mit dem Steg 23a eines an einer Profilschiene 18 des Plastifizierzylinders lösbar befestigten U-Bügels 23 fest verbunden. Mit ihren unteren Enden tauchen die Führungsbolzen 22 unter Zentrierung lose in Bohrungen 18b der horizontalen Wand dieser Profilschiene 18 ein, die einen U-förmigen Querschnitt aufweist (Fig. 4). Die vertikalen Schenkel der Profilschiene sind über umgebördelte Ränder mit Hilfe eines planen Bleches 18c verbunden. Dieses Blech 18c ergänzt insoweit die Profilschiene 18 zu einem Viereckrohr, welches den Plastifizierzylinder 11 unter Bildung eines Schutzraumes S für die Kupplungseinrichtung mit Abstand umschließt. Der mit Heizeinrichtung 30 versehene Plastifizierzylinder 11 ist in bekannter Weise (DE-PS 35 26 710) fest mit dem Viereckrohr verbunden. Die Zylinderbohrung im eigentlichen Zylinder des Kupplungszylinders 15 weist einen unteren Abschnitt geringerer lichter Weite auf, in welchem sich der Zylinderraum 15i befindet. Heizbänder 30a der Heizeinrichtung 30 sind als Wendeln ausgebildet. Der einseitig beaufschlagbare Kolben 15a taucht zur Begrenzung des Zylinderraumes 15i in den Abschnitt geringerer lichter Weite des Zylinders ein. Der Betätigungshub des Betätigungszylinders 15 erfolgt entgegen der Wirkung einer die Kolbenstange 15b umschließenden Schraubenfeder 15c, die rückseitig an der Ringschulter einer Kolbenstange 15b umschließenden Zentrierhülse 15h widergelagert ist und vorne über eine Ringscheibe 15k am Kolben 15a angreift. Ein 'Initiator' 15f, der bei hergestellter Kupplungsverbindung (Fig. 1) stirnseitig einen Ringraum 15d begrenzt, kontrolliert die Arbeit des Kupplungszylinders 15 durch entsprechende Kontrollsignale an den Rechner. Bei Beaufschlagung des Kolbens 15a mit dem über den Anschluß 15e eingeführte Druckmedium ergibt sich ein vertikaler Hub des Kolbens 15a unter gleichzeitiger Vorspannung der Rückstellfeder 15c. Bei dem Hub wird das vordere Ende der Kolbenstange in die Arretierbohrung 24 der horizontalen Wand 18a der Profilschiene 18 zur axialen Arretierung der Plastifiziereinheit eingesteuert. Diese axiale Arretierung ist Voraussetzung für den Rückhub der Spritzgießeinheit zur Freisetzung des Plastifizierzylinders. Zugleich wird durch den vorgenannten vertikalen Hub des Kolbens 14a der über einen Zapfen 21a auf der Stirnkante der Kolbenstange 15b ruhende Schlitten 21 entgegen der Wirkung der die Führungsbolzen 22 im oberen Abschnitt umschließenden Federn 19 mit der Stange 16 nach oben geführt, wodurch das Kupplungselement 17 aus einer Kupplungsposition entsprechend den Fign. 7,8 in eine entkuppelte Position gemäß den Fign. 9-12 geführt wird.

Die Stange 14b verläuft in einem rückwärtigen Abschnitt 16a parallel zur horizontalen Wand 18a der Profilschiene 18. In einem vorderen Abschnitt 16b schließt die Stange 16 einen Winkel zur Horizontalen ein. Dieser vordere Abschnitt 16b ist über ein Spannschloß 25 am Hebel 13b angelenkt. Die Feder 26 umschließt den Endabschnitt der Stange 16 und ist am Schlitten 21 wiedergelagert. Sie greift am Kupplungselement 17 an. Dadurch ist sichergestellt, daß die Verschlußnadel 13a unter der Wirkung der Feder 26 nach Abtrennung der Stange 16 von der Hydraulikeinrichtung 14 in Verschlußstellung gehalten wird. Die Nische T ist von einer winkligen Steckverbinderplatte 28' begrenzt, deren vertikaler Schenkel die Steckverbinder 29' für die Zylinderheizung 30 trägt und deren horizontaler Schenkel 28a' die Nische T unten abschließt. Die Kolbenstange 14b ragt in den Schutzraum S der Plastifiziereinheit hinein. Der vor der Profilschiene 18 begrenzte Schutzraum S ist vorne von einer Abdeckplatte 34 und rückseitig von der Steckverbinderplatte 28 für die korrespondierenden Steckverbinder 29 der Zylinderheizung 30 abgeschlossen. Die Steckverbinderplatten 28,28' liegen etwa in der Ebene b-b der Stirnseite des Trägerblockes 10.

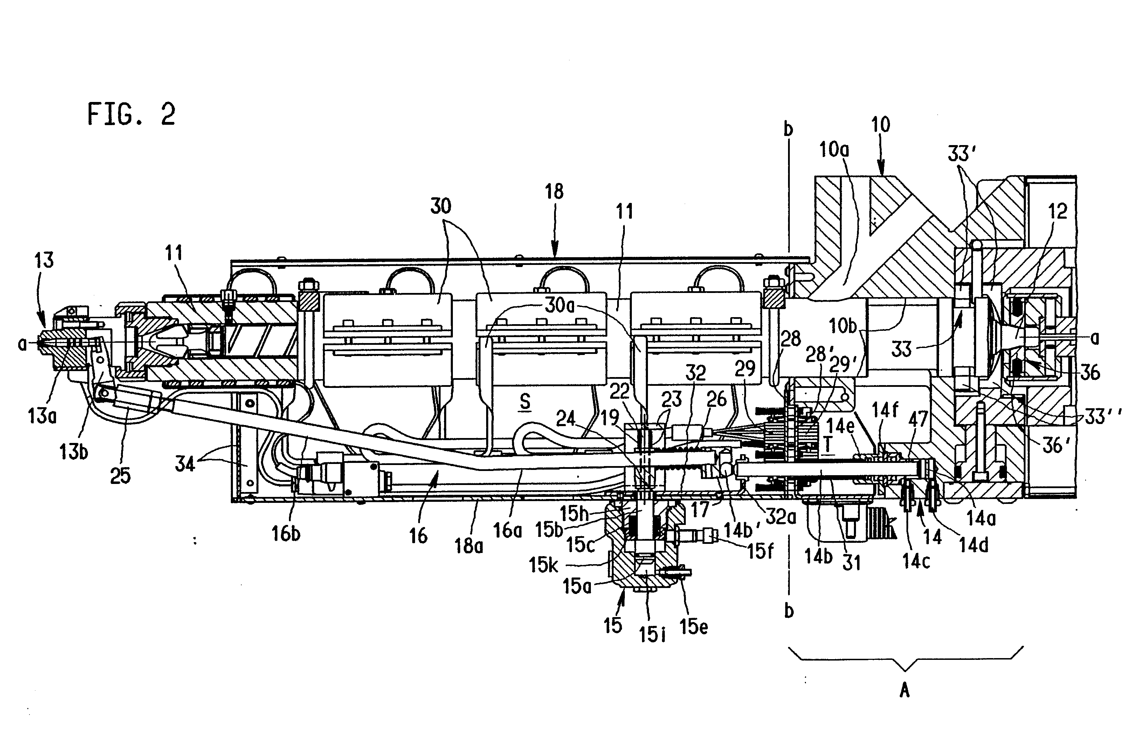

Wie aus den Fign. 1,2 erkennbar, ist das in den Schutzraum S hineinragende Ende der Kolbenstange 14b im vertikalen Schenkel 32a eines an der Wand 18a der Profilschiene 18 befestigten Stützwinkels 32 geführt.

Bei Entlastung des Zylinderraumes 15i gelangt die Kolbenstange 15b sowohl unter der Wirkung der Rückstellfeder 19 als auch unter der Wirkung der Feder 15c aus ihrer Arretierposition gemäß Fig. 1. Zugleich wird das Hintergriffselement durch die Wirkung der Feder 19 in seine untere Hintergriffsposition überführt. Wie aus den Fign. 4,5 erkennbar, sind die Steckverbinder 29,29' in vertikalen Zeilen und symmetrisch zur vertikalen Symmetrieebene c-c (Fig. 4) angeordnet. Bei Umwandlung einer mit offener Düse versehenen Plastifiziereinheit in eine solche mit Verschlußdüse können nach Wechsel der Düse folgende Bauteile mit minimalem Montageaufwand in die Plastifiziereinheit eingeführt werden: Das Kolben 14a, Kolbenstange 14b und Kupplungskopf 14b' umfassende Bauteil, die aus Fig. 13 ersichtliche Einrichtung mit Schlitten 21 zur Vertikalführung der Stange 16 und die Stange 16 als solche mit Spannschloß 25.

Im folgenden wird auf die Besonderheiten des Ausführungsbeispieles gemäß den Fign. 14-18 eingegangen: Der Plastifizierzylinder 11' ist der zentralen Bohrung 10b' des Trägerblockes 10' durch zwei diametral angeordnete und radial geführte hydraulische antreibbare Schieber 33';33";33'" automatisch verriegelbar. Die Verschieberichtung dieser Schieber liegt vertikal. Der Steuerungszylinder 14' ist mit dem unteren zweiteiligen Schieber 33";33'" zu einer Bewegungseinheit verbunden. Der eigentliche Zylinder 14k des Steuerungszylinders 14' ist sowohl mit der rückseitigen planen Oberfläche als auch mit der vorderseitigen planen Oberfläche dieses Schiebers 33";33'" bündig. Der vordere Zylinderdeckel 14e' weist den gleichen Durchmesser auf wie der eigentliche Zylinder 14k. Der Zylinderdeckel 14e' steht mit dem Kupplungselement 17 über einen horizontalen Sicherungsstift 58 zur Drehsicherung in Verbindung, wie insbesondere aus Fig.16 ersichtlich. Die Kupplungseinrichtung liegt innerhalb der Nische T' des Trägerblockes 10', welche hinten von einem wandartigen, sich vertikal erstreckenden Teil 10d des Trägerblockes 10' und vorne von der Steckverbinderplatte 28' begrenzt ist. Der Steuerungszylinder 14' ist einer sich vertikal erstreckenden Ausnehmung 59 des wandartigen Teiles 10d des Trägerblockes 10' führbar, wenn er mit dem Schieber 33'',33''' in vertikaler Richtung zur Herstellung der Kupplungsverbindung bzw. zur Lösung dieser Verbindung bewegt wird. Somit wird die Verriegelungsbewegung-bzw. Entriegelungsbewegung der Scheiber 33';33'',33''' zur Betätigung der Kupplungseinrichtung ausgenutzt. Wie aus Fig. 18 ersichtlich, sind die Schieber mit Hilfe von Hydraulikzylindern 60 entgegen der Wirkung von Federn aus Verriegelungsposition steuerbar. Auf den Aufbau der Schieber 33';33'',33''' und der zugehörige Antriebseinrichtung zur axialen Verriegelung und Entriegelung des Plastifizierzylinders braucht im einzelnen nicht eingegangen zu werden, da dies Gegenstand der deutschen Patentanmeldung P 37 35 769.7-16 des gleichen Anmelders ist. Aus Fig. 18 ist jedenfalls ersichtlich, daß zwei Hydraulikzylinder 60 mit Kolben 60b und Kolbenstangen 60a symmetrisch zur vertikalen Symmetrieebene c-c der Spritzgießeinheit in die genannten Schieber integriert sind. Der untere Schieber 33'',33''' ist aus zwei kongruenten Teilen zusammengesetzt, die mittels Verbindungselementen 62 miteinander verbunden sind. Bei der Vertikalbewegung der Schieber ist der mit einem Radialflansch versehene vordere Zylinderdeckel 14e' im Bereich der Ausnehmung 59 am wandartigen Teil 10d des Trägerblockes 10 geführt. Wie aus Fign. 16-18 ersichtlich, ist der düsenseitige Zylinderraum mittels Dichtungselement 14h' sowie Dichtringen abgedichtet, die an einer im Zylinderdeckel 14e' angeordneten Ringscheibe 14f' beidseits anliegen.

Das Kupplungselement 17 ist mit Hilfe eines Bolzens 65 an der Kolbenstange 14b'' angelenkt. Der rückseitige Zylinderdeckel 14n liegt auf der rückseitigen planen Oberfläche des Schiebers 33'',33''' auf, wie aus Fig. 18 erkennbar. Dieser Zylinderdeckel 14n dient zugleich als Verteilerplatte, durch welche des Druckmedium über die Anschlüsse 14c';14d' in den rückseitigen bzw. vorderseitigen Zylinderraum des Steuerungszylinders 14' gelangt. Die lineare kraftübertragende Stange 16' ist in Armierungselementen 50,51,52 des Plastifizierzylinders 11' geführt. Sie steht über ein abgewinkeltes Verbindungsstück 16d mit dem zweiarmigen Hebel 13b' in gelenkiger Verbindung, welcher in der Düse 13' drehbar gelagert ist und an der Düsennadel 13a' angreift. Die als Schraubenfeder ausgebildete, die Düsennadel 13a' in Verschlußstellung drückende Feder 26' ist an einer Führungsmuffe 63 (Fig. 15) des Armierungselementes 50 abgestützt und greift über einen Sprengring an der Stange 16' an, die am freien Ende in den Kupplungskopf 14b' ausläuft. Dieser Kupplungskopf 14b' arbeitet mit dem an der Kolbenstange 14b'' angelenkten Kupplungselement 17 in gleicher Weise zusammen wie der Kupplungskopf 14b' mit dem Kupplungselement 17 im Ausführungsbeispiel der Fign. 1-13 zusammenarbeitet, was anhand der Fign. 7-12 eingehend beschrieben ist. Hinzuweisen ist allerdings darauf, daß die Kupplungseinrichtung gemäß dem Ausführungsbeispiel der Fign. 14-18 in kinematischer Umkehrung zur Kupplungseinrichtung gemäß. den Fign. 1-13 arbeitet, indem nunmehr das am Steuerungszylinder 14' angeordnete Kupplungselement 17 zur Herstellung der Kupplung bzw. zur Lösung der Kupplung bewegt wird und der an der kraftübertragenden Stange 16' angeordnete Kupplungskopf 14b' radial festgelegt ist.

Im Vergleich zum Ausführungsbeispiel der Fig. 1-13 beim Ausführungsbeispiel der Fig. 14-18 ist die Umwandlung der Grundvariante (mit offener Düse) in die nachgerüstete Variante (mit Verschlußdüse) noch einfacher und dies bei gleich guter Eignung für einen nach Programm steuerbaren Wechsel des Plastifizierzylinders. Denn nach Austausch der Düse sind lediglich die mit Kupplungsteil versehene kraftübertragende Stangen 16' und der mit Kupplungsteil versehene Steuerungszylinder (14') in die hierfür vorgesehenen Paß-und Führungssitze einzufügen.

<u>Liste</u> <u>der</u> <u>Bezugszeichen</u> ( kein Bestandteil der Anmel dungsunterlagen)

       10 Trägerblock
       10a Fallschacht
       10b horizontale Bohrung
       10c Teil von 10
       11 Plastifizierzylinder
       11b Abschnitt des 11
       12 Förderschnecke
       13 Verschlußdüse
       13a Verschlußnadel
       13b zweiarmiger Hebel
       14 Hydraulikeinrichtung
       14a Kolben
       14b Kolbenstange
       14b' Kupplungskopf
       14c, 14d Anschlüsse
       14e Deckel
       14f Ringscheibe
       14h Dichtungshülse
       15 Betätigungszylinder
       15a Kolben

15b Kolbenstange
15c Schraubenfeder
15d Ringraum
15e unterer Anschluß
15f Initiator
15h Zentrierhülse
15i unterer Zylinderraum
15k Ringscheibe
16 kraftübertragende Stange
16a,16b Abschnitte der Stange
17 Kupplungselement
17a Kupplungsraum
17b Führungsbahn
17d Wandungen, durch welche 17b begrenzt ist
17d' Hintergriffsflanken
18c Blech (Fig. 4)
18 Profilschiene
18a horizontale Wand
18b Bohrungen in 18
19 Feder
20 Bohrung in 21
21 Schlitten
21a Zapfen
22 Führungsbolzen
23 U-Bügel
23a Steg
24 Arretierbohrung in 18a
25 Spannschloß
26 Feder
28,28' Steckverbinder
28a' horizontaler Schenkel
29,29' Steckverbinder
30 Zylinderheizung, 30a Heizbänder
31 Führungshülse
32 Stützwinkel
32a Schenkel
33 Verriegelungseinrichtung für 11
33' Schieber
34 vordere Abdeckplatte
35 Führungsstück mit zylindrischer Mantelfläche
36 Verriegelungseinrichtung
36' Schieber

a-a Spritzachse
b-b Ebene der Stirnseite von 10
S Schutzraum
T Nische
c-c vertikale Symmetrieebene
47 Sacklochbohrung in 10
48 Säulen für Führung der Spritzgießeinheit
A axialer Abschnitt der zentralen Bohrung

Fign. 14-18
50 Armierungselement
51 Armierungselement
52 Armierungsplatte
58 horizontale Sicherungsstifte für Kupplung
59 Ausnehmung in 10c' als vertikale Führung für 14
60 Kolbenstange
60a Kolbenstange
60b Kolben
62 Verbindungselemente
63 Führungsmuffe
65 Bolzen
10d wandartiges Teil von 10
14b" Kolbenstange
14k eigentlicher Zylinder von 14
14n hinterer Zylinderdeckel
16d Anschlußstück
33",33"' zweiteiliger unterer Schieber

**Ansprüche**

1. Mittels einer hydraulischen Antriebseinrichtung in horizontalen Führungen verschiebbare Spritzgießeinheit für eine Kunststoff-Spritzgießmaschine mit einer Plastifiziereinheit, deren Plastifizierzylinder (11) rückseitig in der zentralen Bohrung (10b) eines Trägerblockes (10) verriegelbar und im Gefolge einer hydraulisch bewirkten Relativbewegung (Freisetzungsbewegung) zum Trägerblock (10) aus der Bohrung (10b) zwecks Auswechslung freisetzbar ist, und mit einer rotierbaren und axial verschiebbaren Förderschnecke (12) in dem mit einer offenen Düse oder mit einer Verschlußdüse (13) ausrüstbaren Plastifizierzylinder (11), dadurch gekennzeichnet, daß im Falle eines mit einer Verschlußdüse (13) ausgerüsteten Plastifizierzylinders (11) ein die Verschlußnadel (13a) der Verschlußdüse (13) über einen Hebel (13b) steuernder Hydraulikzylinder (Steuerungszylinder 14) an dem Trägerblock (10) angeordnet ist und mit diesem bei der Freisetzungsbewegung eine Bewegungseinheit bildet sowie über wenigstens ein kraftübertragendes Element (Stange 16) mit dem Hebel (13b) gelenkig verbunden ist, und daß eine hydraulisch betätigbare Kupplungseinrichtung zur automatischen Abtrennung der Hydraulikeinrichtung (14) vom Element (Stange 16) vorgesehen ist, deren Hydraulikzylinder (Kupplungszylinder 15 im Ausführungsbeispiel der Fig. 1-13 und 60 im Ausführungsbeispiel der Fig. 14-18) etwa senkrecht zum Steuerungszylinder (14) steht.

2. Spritzgießeinheit nach Patentanspruch 1, dadurch gekennzeichnet, daß die an den freien Enden des kraftübertragenden Elementes (Stange 16) und der Kolbenstange (14b) des Steuerungszylinders (14) angeordneten Kupplungsteile (17;14b') der Kupplungseinrichtung in der vertikalen Symmetrieebene (c-c) der Spritzgießeinheit angeordnet und im Gefolge einer durch den Kupplungszylinder (15; 60) bewirkten, zum Plastifizierzylinder (11) radial gerichteten Relativbewegung in bzw. aus Kupplungsposition bewegbar sind, in welcher sie sich gegenseitig hintergreifen.

3. Spritzgießeinheit nach Patentanspruch 1 oder 2, dadurch gekennzeichnet, daß der Steuerungszylinder (14) unterhalb des in der zentralen Bohrung (10b) aufgenommenen Abschnittes (11b) des Plastifizierzylinders (11) in der vertikalen Symmetrieebene der Spritzgießeinheit in einer Nische (T) des Trägerblockes (10) angeordnet ist, welche Nische (T) von einer Steckverbinderplatte (28') abgedeckt ist.

4. Spritzgießeinheit nach einem der Patentansprüche 1 bis 3, dadurch gekennzeichnet, daß das als Stange (16) ausgebildete kraftübertragende Element unter der axial wirkenden Kraft einer mittelbar am Plastifizierzylinder (11) widergelagerten, die Düsennadel (13a) in Verschlußstellung haltenden Feder (26) steht.

5. Spritzgießeinheit nach einem der vorhergehenden Patentansprüche, dadurch gekennzeichnet, daß die Kolbenstange (14b) des in einer Sacklochbohrung (47) des Trägerblockes (10) gelagerten Kolbens (14a) des Steuerungszylinders (14) einen Kupplungskopf (14b') aufweist, der in Kupplungsposition von einem Kupplungselement (17) der Stange (16) hintergreifbar ist, welches Kupplungselement (17) vom Kupplungszylinder (15) zwecks Entkupplung radial zum Plastifizierzylinder (11) bewegbar ist (Ausführungsbeispiel der Fig. 1-13).

6. Spritzgießeinheit nach Patentanspruch 5, dadurch gekennzeichnet, daß die Stange (16) einen in vertikalen Führungsbolzen (22 in Fig. 13) führbaren Schlitten (21) mit Spiel durchsetzt, der vom Kupplungszylinder (15) entgegen der Wirkung von Rückstellfedern (19) anhebbar ist, wobei die Führungsbolzen (22) oben mit einem an einer Profilschiene (18) des Plastifizierzylinders (11) lösbar befestigten U-Bügel (23) verbunden sind und unten in Bohrungen (18b) der Profilschiene (18) zentriert sind (Fig. 13).

7. Spritzgießeinheit nach Patentanspruch 5 oder 6, dadurch gekennzeichnet, daß der Kupplungszylinder (15) an einem stationären Teil (Führungssäulen 48) der Spritzgießeinheit befestigbar ist und daß die Kolbenstange (15b) des Kupplungszylinders (15) im Gefolge ihrer den Schlitten (21) anhebenden Vertikalbewegung in eine Arretierbohrung (24) der horizontalen Wand (18a) der Profilschiene (18) zur axialen Arretierung des Plastifizierzylinders (11) einsteuerbar ist.

8. Spritzgießeinheit nach einem der Patentansprüche 1 bis 4, dadurch gekennzeichnet, daß der Plastifizierzylinder (11')in der zentralen Bohrung (10b') des Trägerblockes (10')durch zwei diametral angeordnete und radial geführte sowie hydraulisch antreibbare Schieber (33';33",33"') automatisch verriegelbar ist und daß der Steuerungszylinder (14')-mit einem dieser Schieber zu einer Bewegungseinheit verbunden ist (Ausführungsbeispiel der Fign. 14-18).

9. Spritzgießeinheit nach Patentanspruch 8, dadurch gekennzeichnet, daß der eigentliche Zylinder (14k) des Steuerungszylinders (14') mit den beidseitigen Oberflächen dieses Schiebers bündig und mit einem vorderen Zylinderdeckel (14e) gleichen Durchmessers versehen ist, der über einen horizontalen Sicherungsstift (58) mit dem an der Kolbenstange (14b) angelenkten Kupplungselement (17) zur Drehsicherung in Verbindung steht.

10. Spritzgießeinheit nach einem der Patentansprüche 5 bis 9, dadurch gekennzeichnet, daß die Kupplungseinrichtung innerhalb der hinten von einem wandartigen, sich vertikal erstreckenden Teil (10d) des Trägerblockes (10') und vorne von einer Steckverbinderplatte (28') begrenzten Nische (T) des Trägerblockes (10')angeordnet und der Steuerungszylinder in einer sich vertikal erstreckenden Ausnehmung (59) des wandartigen Teils (10d) führbar ist.

# FIG. 1

0 283 582

FIG. 2

0 283 582

FIG. 3

FIG. 4

FIG. 5

10

36

10b

33

48

28'

29'

16

0 283 582

FIG. 6

0 283 582

FIG. 7

FIG. 8

14b

FIG. 9

FIG.10

14b

FIG.11

FIG.12

14b

FIG. 13

# FIG.14

# FIG.15

0 283 582

FIG.16

FIG.17

FIG. 18

0 283 582